# EUROPEAN PATENT SPECIFICATION

(11) **EP 1 033 518 B1**
(45) Date of publication and mention of the grant of the patent: **17.07.2002**
(21) Application number: 00300695.4
(22) Date of filing: 28.01.2000
(51) Int. Cl.: F16L 25/00, F16L 21/04, F16L 21/08, F16L 58/18

(54) **Pipe coupling**
Rohrverbindung
Raccord de tuyaux

(30) Priority: 29.01.1999 GB 9901962
(43) Date of publication of application: 06.09.2000
(73) Proprietor: GLYNWED PIPE SYSTEMS LIMITED, Sheldon, Birmingham B26 3AZ (GB)
(72) Inventor: Rex, Brian, Hitchin, Hertfordshire SG5 2HH (GB); Harper, Brian, Hitchin, Hertfordshire SG4 0RS (GB)
(74) Representative: Hutchins, Michael Richard

(56) References cited:
- EP-A- 0 459 542
- EP-A- 0 913 622
- DE-A- 2 244 300
- US-A- 4 679 830
- US-A- 4 702 645
- US-A- 5 082 313

## Description

This invention relates to a pipe coupling for coupling together a pipe having a liner pipe, hose or sleeve disposed therein to a another pipe element.

Until recently, pipes made from ferrous materials have been used for pipelines, and in particular mains pipelines, for conveying services such as gas and water. A substantial problem with such ferrous pipes has been their tendency to corrode over a period of several years' use leading to loss of integrity of the pipe wall. One solution to this problem has to been to provide a liner pipe, hose or sleeve formed from a suitable material, for example a plastics material such as polyethylene, or an elastomeric material. In order to undertake a pipe lining operation, it is conventional to dig trenches at intervals of, for example, 100 metres and remove a section of the old pipe to allow access to the pipe bore. A liner is then pulled through the host pipe from one trench to the next such that eventually the end of the liner protrudes beyond the ferrous pipe end. After lining each section of old ferrous pipe, the gaps between adjacent lined sections need to be bridged using a standard modern pipe material which could be, for example, steel, ductile iron, polyethylene, polyvinylchloride or another plastics material. In order to ensure that the pipe joint between the lined sections of old pipe and the bridging lengths of pipe are fluid-tight, it is necessary to provide a mechanical seal between the pressure-containing plastics liner and the pipe coupling, and it is also necessary to provide a mechanical seal between the plastics liner pipe and the host ferrous pipe against the ingress of ground water. It is also desirable to provide a gripping means for preventing retraction of the liner pipe into the ferrous host pipe. Devices for connecting a thin-walled hose with a tubular element are knwon from EP 0 459 542 A2 and whilst EP 0 913 622 A2, which is considered prior art under Art. 54(3) EPC, teaches a pipe coupling for connecting together a first pipe member having a liner pipe arranged the bore thereof, to a second pipe member, such a pipe coupling does not provide a means of terminating a length of lined pipe with a single spigot end which can then be coupled to another pipe using a standard flanged compression coupling sleeve.

It is an object of the present invention to provide a pipe coupling which solves the aforementioned problems.

Accordingly, in a first aspect, the invention provides a pipe coupling for connecting to a pipe member having a liner pipe disposed therein; the pipe coupling comprising a first sleeve member for receiving an end of the pipe member whereby an end of the liner pipe can protrude therefrom; a second sleeve member configured at one end thereof to receive the protruding end of the liner pipe and having at the other end thereof a substantially plain-ended spigot formation for insertion into and attachment to another pipe coupling or pipe member; an annular collar disposed axially outwardly of the first sleeve member and being arranged in use to encircle the pipe member; a first annular sealing means disposed axially between the annular collar and the first sleeve member and arranged in use to encircle the pipe member; second annular sealing means disposed axially between the first and second sleeve members and arranged in use to encircle the protruding liner pipe; means for drawing the annular collar and first sleeve member axially together such that the first annular sealing means is compressed therebetween and is deformed radially inwardly to seal against the pipe member; and means for drawing the first and second sleeve members axially together such that the second annular sealing member is compressed between the first and second sleeve members and is deformed radially inwardly into sealing contact with the end of the liner pipe.

The term pipe member as used herein refers to pipes as such, and also to pipe-like members such as elbows, bends, T-pieces, adaptors, valve bodies, and like members. The term liner pipe as used herein includes liner hoses and liner sleeves as well as liner pipes.

The pipe member, e.g. the host pipe, is typically a ferrous pipe member, for example a cast iron mains pipe.

The liner pipe is usually formed from a suitable plastics material such as a polyolefin, e.g. polyethylene. Typically, the liner pipe will have a supporting element, for example a support sleeve, disposed in the end thereof to prevent the liner from collapsing radially inwardly when compressed.

The means for drawing the annular collar and first sleeve member together, and the means for drawing the first and second sleeve members together are preferably one and the same. Thus, for example, the annular collar and the second sleeve member are preferably provided with radially extending flanges having an array of aligned holes through which flange bolts can be positioned, tightening of the flange bolts serving to draw the first and second sleeve members axially together.

It is preferred that in addition to the second annular sealing member, gripping means are provided between the first and second sleeve members, the gripping means being compressible against the pipe member to grip the same as the first and second sleeve members are drawn together. The gripping means can be integrally formed with the second annular sealing member, but more usually the gripping means is formed separately from the second annular sealing member and is located adjacent thereto.

The first sleeve member typically has a radially outwardly inclined (i.e. flared) end portion at its axial outer end. In use, the first annular sealing member is urged against the flared end portion as the annular collar and first sleeve member are drawn together, the inclined surfaces of the flared portions assisting the sealing member to be deformed radially inwardly against the pipe member.

The axially inner ends of the first and second sleeve members can be configured so that together they define an annular cavity within which is disposed the second sealing member and optionally an annular gripping member. One of the sleeve members can have an axially inner end (hereinafter referred to as the spigot portion) which is radially outwardly inclined (i.e. flared) and is of a size enabling it to be received within a socket portion of the axially inner end of the other sleeve member. The socket portion can comprise a generally cylindrical or slightly inclined region extending in a direction towards the axially outer end of the sleeve member into a radially inwardly inclined (i.e. tapering) abutment surface. The inner surface of the spigot portion, and the generally cylindrical or slightly inclined region and tapering abutment surface of the socket portion together can define the annular cavity.

The annular cavity can contain only an annular sealing means, but preferably the cavity also contains the first annular gripping means for gripping the liner pipe. The first annular gripping means can be formed integrally with the sealing means or it can be a separate element. For example, the gripping means can take the form of gripping elements embedded in the sealing means.

In another aspect, the invention provides a pipe coupling combination comprising a pipe coupling as hereinbefore defined, the substantially plain-ended spigot formation of the pipe coupling being clamped within the bore of a second pipe coupling.

In a further aspect, the invention provides a pipe joint comprising a pipe coupling or a pipe coupling combination as hereinbefore defined, wherein a host pipe and liner are received within and connected to one end of the pipe coupling or pipe coupling combination.

In a still further aspect, there is provided a pipe coupling combination as hereinbefore defined wherein the second pipe coupling has received within and secured to an end thereof remote from the spigot formation a length of plain ended pipe.

The invention also provides a method of lining a host pipe comprising removing a section of the host pipe to leave a gap between a pair of severed ends; installing lengths of liner pipe in the host pipe either side of the gap so that the ends of the liner pipe protrude from the severed ends of the host pipe; securing a pipe coupling combination as hereinbefore defined to the end of each severed end and to the liner pipes protruding therefrom such that the second pipe couplings are innermost in the gap; and connecting a length of linking pipe to the two second pipe couplings so as to bridge the gap.

The invention will now be illustrated by way of example with reference to the particular embodiment shown in the drawings of which:
Figure 1 which is a partial sectional elevation illustrating a repaired length of pipeline;
Figure 2 is an enlarged view of the region marked A in Figure 1; and
Figure 3 is a partial sectional elevation of the pipe coupling of the invention shown in Figures 1 and 2.

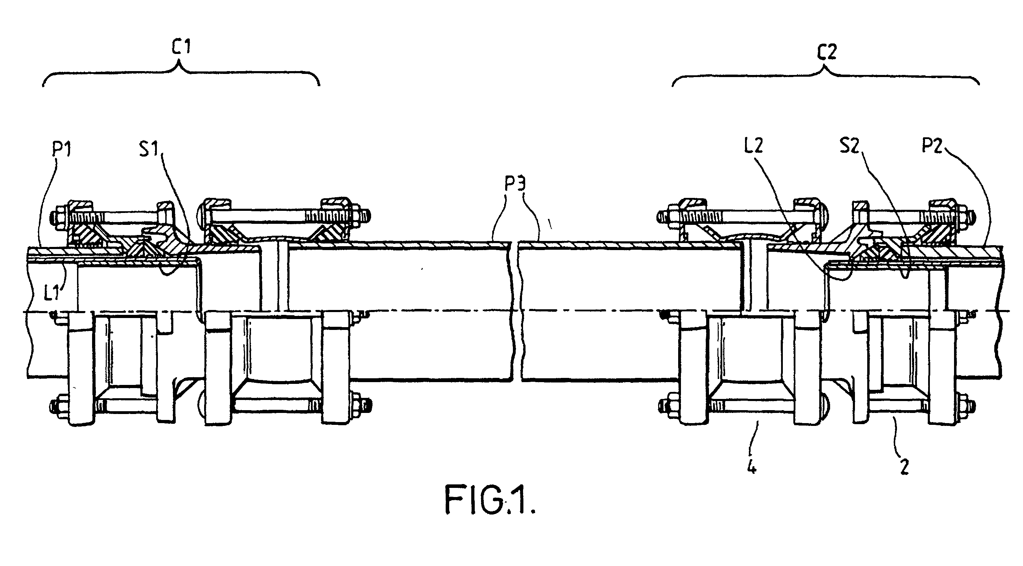

Referring now to the drawings, Figure 1 illustrates an arrangement in which the severed ends P1, P2 of a host pipe lined with lengths L1, L2 of a plastics liner pipe are linked via pipe coupling combinations C1 and C2 by a length of linking pipe P3. An arrangement of the type shown would typically be installed by digging trenches at intervals (e.g. 100 metre intervals) along the route of an old pipeline (such as a cast iron main) in need of repair to expose the old pipe and then cutting out lengths of the old pipe to allow access to the pipe bore. Lengths of liner pipe, for example liner pipe formed from polyolefins such as polyethylene, are then inserted by appropriate means such that the ends of the liners L1, L2 protrude beyond the end of the old host pipe P1, P2. A length of new pipe P3, formed for example from ductile iron, or steel, or a plastics material such as a polyolefin, or PVC, is then connected between the ends of the lined lengths of host pipe P1/L1, P2/L2 by means of coupling arrangements C1, C2 to complete the repair.

Coupling arrangements C1 and C2 each comprise a pipe coupling 2 of the invention coupled to a plain ended-pipe coupling sleeve 4. Pipe coupling sleeve 4, which in this embodiment is of entirely conventional construction, comprises a barrel-shaped sleeve 6 having flared ends 8, a pair of compression flanges 10, and sealing/gripping rings 12. Compression bolts 14 and attached nuts 16 are disposed around the circumference of each flange 10 and link the two flanges 10 together in standard fashion.

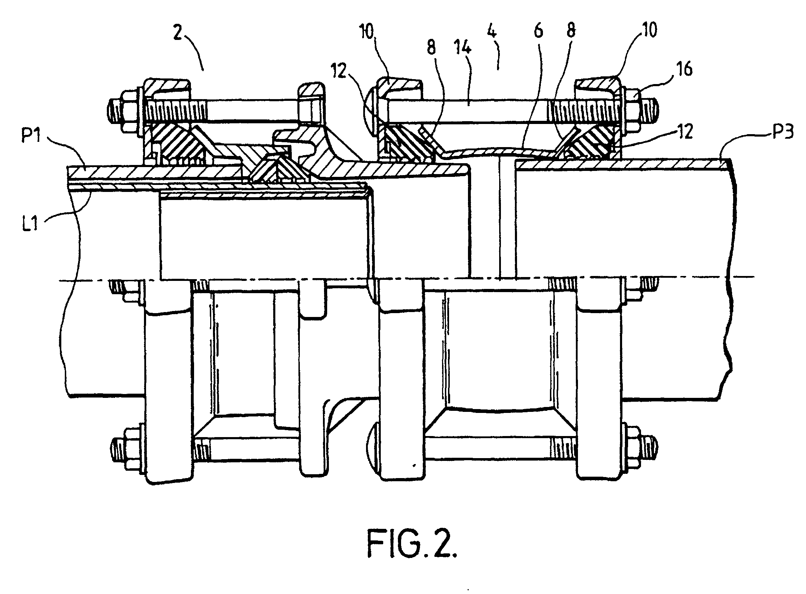

As can be seen from Figures 1 and 2, one end of the coupling 4 is attached to an end of the linking pipe P3 whilst the other end of the coupling 4 is attached to the coupling 2 of the invention.

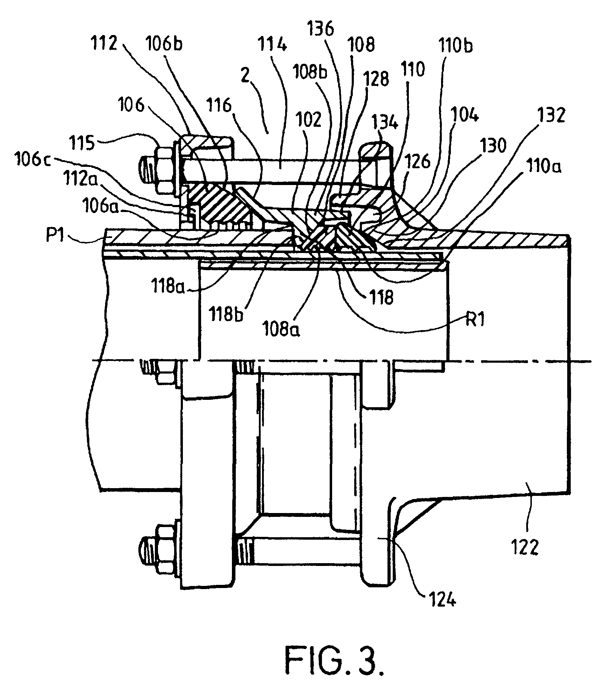

As can best be seen in Figure 3, coupling 2 comprises first and second sleeve members 102, 104, first and second annular sealing members 106, 110, annular gripping member 108, compression collar 112 and flange bolts 114.

First sleeve member 102 is generally cylindrical in form and is typically fabricated from ductile or malleable iron, or mild steel. Sleeve member 102 has a flared axial end portion 116 and a radially inwardly oriented abutment portion 118. Abutment portion 118 has an axially outer surface 118a which is generally perpendicular to the axis of the coupling, and an axially inner surface 118b which is inclined and forms a tapering abutment surface.

The second sleeve member 104 has a tapering spigot portion 122 extending from a flange portion 124. Flange portion 124 has an annular recess 126 bounded by a radially outer annular rim 128 and a radially inner annular rim 130. The radially inner surface 132 of the annular rim 130 is inclined outwardly towards the mid point of the coupling 2.

The collar 112 and the flange portion 124 are each provided with an array of aligned holes through which flange bolts 114 are inserted. A nut 115 engages the threaded end of each flange bolt 114 enabling the flanged portion 124 and collar 112 to be tightened together. The collar 112 has an annular lip portion 112a at its radially inner edge.

Disposed axially between the annular collar 112 and the first sleeve member 102 is the first annular sealing member 106. Annular sealing member 106 has a generally cylindrical radially inner surface configured to provide a plurality of annular gripping ribs 106a. The sealing member 106 has an inclined surface 106b and an annular recess region 106c. In use, the inner end of inclined surface 106b abuts against the flared portion 116 of the first sleeve member 102.

The annular collar 112, sealing member 106 and sleeve member 102 are shaped so as to be able to receive therein an end of a mains pipe P1, which may be for example a cast iron mains pipe. Mains pipe P1 has extending from the end thereof a length of liner pipe L1 which is formed from a suitable grade of polyethylene. Disposed within the protruding end of the liner pipe L1 is a short length of a reinforcing liner R1 which may, for example, be formed from a plastics material such as polyethylene or a metal such as aluminium.

The sleeve member 102 has, at its axially inner end, a socket portion 136 defined by a generally cylindrical but slightly tapering region 134 and the inclined abutment surface 118b. The generally cylindrical region 134 and the abutment surface 118b, together with the inclined surface 132 of the inner rim 130 of the second sleeve member 104 form an annular cavity within which are disposed the second annular sealing member 110 and a gripping member 108. Gripping member 108 typically is formed from a plastics material, e.g. an engineering plastics material such as Nylon or polyacetal, although it could be made instead from a metal such as steel, and has an array of annular gripping ribs or serrations 110a on its radially inner surface. Gripping ring 108 also has a radially inclined surface 108b which abuts against inclined surface 118b of the abutment portion 118 of the first sleeve member 102.

Second annular sealing member 110 has a generally cylindrical radially inner surface provided with an array of annular ribs 110a, and has an inclined outer surface 110b. The inclined surface 110b of the first sealing member rests against the inclined surface 132 of the radially inner rim 130 of the second sleeve member 104.

In use, the host pipe member P1 is inserted into the end of the coupling, such that the liner pipe L1 protrudes from the end of the pipe P1, and the collars 112 and flange portion 124 are drawn axially together by tightening the flange bolt/nut arrangements 114, 115. As the collar and flange portion are drawn together, so the two annular sealing members 106, 110 are compressed and deformed radially inwardly into contact with respectively the pipe member P1 and the liner pipe L1.

Thus, first annular sealing member 106 is compressed axially between the flared end portion 116 of the first sleeve member 102 and an axially inner face of the collar 112. As the inclined surface 106b of the sealing member 106 is urged into engagement with the radially inner surface of flared portion 116, the effect is to compress the sealing member 106 radially inwardly against the mains pipe P1, thereby to form a seal between the mains pipe P1 and the sleeve member 106. The resulting seal prevents, for example, entry of ground water into any annular space between the pipe P1 and the liner pipe L1.

As the collar 112 and flange portion 124 are drawn together, the second sealing member 110 and the gripping member 108 are compressed between the first and second sleeves and are urged radially inwardly into sealing and gripping contact with the liner pipe L1. The gripping ribs or serrations of the gripping member bite into the outer surface of the liner to prevent it from being dislodged, whilst the sealing member provides a seal between the first sleeve member 102 and the liner pipe L1. The support sleeve R1 disposed within the end of the liner prevents the liner from collapsing as it is subjected to compressive forces.

Once the pipe coupling 2 has been fitted to the end of the pipe P1 and liner pipe L1, the plain spigot end 122 of the second sleeve member can be inserted into and coupled to the conventional coupling 4 which in turn can be connected to the length of new pipe P3.

The advantage of the pipe coupling illustrated in the drawings is that it provides a means of terminating a length of lined pipe with a single spigot end which can then be coupled to another pipe using a standard flanged compression coupling sleeve.

## Claims

1. A pipe coupling (2) for connecting to a pipe member (P1) having a liner pipe (L1) disposed therein; the pipe coupling (2) comprising a first sleeve member (102) for receiving an end of the pipe member (P1) whereby an end of the liner pipe (L1) can protrude therefrom; a second sleeve member (104) configured at one end thereof to receive the protruding end of the liner pipes (L1) and having at the other end thereof a substantially plain-ended spigot formation (122) for insertion into and attachment to another pipe coupling or pipe member; an annular collar (112) disposed axially outwardly of the first sleeve member and being arranged in use to encircle the pipe member (P1); a first annular sealing means (106) disposed axially between the annular collar (112) and the first sleeve member (102) and arranged in use to encircle the pipe member (P1); second annular sealing means (110) disposed axially between the first and second sleeve members (102, 104) and arranged in use to encircle the protruding liner pipe (L1); means for drawing the annular collar (112) and first sleeve member (102) axially together such that the first annular sealing means (106) is compressed therebetween and is deformed radially inwardly to seal against the pipe member (P1); and means for drawing the first and second sleeve members (102, 104) axially together such that the second annular sealing member (110) is compressed between the first and second sleeve members (102, 104) and is deformed radially inwardly into sealing contact with the end of the liner pipe (L1).

2. A pipe coupling according to claim 1 wherein the means for drawing the annular collar (112) and first sleeve member (102) together, and the means for drawing the first and second sleeve members (102, 104) together are one and the same.

3. A pipe coupling according to claim 2 wherein the annular collar (112) and the second sleeve member (104) are each provided with a circumferential flange (124), and the flanges (124) are linked by flange bolts (114).

4. A pipe coupling according to any one of the preceding claims wherein gripping means (108) are provided between the first and second sleeve members (102, 104), the gripping means (108) being compressible against the pipe member (P1) to grip the same as the first and second sleeve members (102, 104) are drawn together.

5. A pipe coupling according to claim 4 wherein the gripping means (108) is integrally formed with the second annular sealing member (110).

6. A pipe coupling according to any one of claims 1 to 4 wherein the gripping means (108) is formed separately from the second annular sealing member (110) but is located adjacent thereto.

7. A pipe coupling according to any one of the preceding claims wherein the first and second sleeve members (102, 104) are configured such that together they define an annular recess in which are disposed the second annular sealing member (110) and optionally the gripping means (108).

8. A pipe coupling according to claim 7 wherein the annular recess tapers in a radially outwards direction.

9. A pipe coupling combination (C1, C2) comprising a pipe coupling (2) as defined in any one of the preceding claims, the substantially plain-ended spigot formation (122) of the pipe coupling (2) being clamped within the bore of a second pipe coupling (4).

10. A pipe joint comprising a pipe coupling (2) as defined in any one of claims 1 to 8, or a pipe coupling combination (C1, C2) as defined in claim 9, wherein a host pipe (P1, P2) and liner (L1, L2) are received within and connected to one end of the pipe coupling (2) or pipe coupling combination (C1, C2).

11. A pipe coupling combination according to claim 9 or a pipe joint according to claim 10 containing the pipe coupling combination of claim 9 wherein the second pipe coupling (4) has received within and secured to an end thereof remote from the spigot formation (122) a length of plain ended pipe (P3).

12. A method of lining a host pipe comprising removing a section of the host pipe to leave a gap between a pair of severed ends; installing lengths of liner pipe in the host pipe either side of the gap so that the ends of the liner pipe protrude from the severed ends of the host pipe; securing a pipe coupling combination according to claim 10 to the end of each severed end and to the liner pipes protruding therefrom such that the second pipe couplings (4) are innermost in the gap; and connecting a length of linking pipe (P3) to the two second pipe couplings (4) so as to bridge the gap.

## Patentansprüche

1. Rohrkupplung (2) zur Verbindung mit einem Rohrabschnitt (P1), der einen Auskleidungsschlauch (L1) im Inneren aufweist; wobei die Rohrkupplung (2) folgende Teile aufweist: einen ersten Hülsenkörper (102), der ein Ende des Rohrabschnitts (P1) derart aufnimmt, daß ein Ende des Auskleidungsschlauches (L1) aus diesem Rohr vorstehen kann; einen zweiten Hülsenkörper (104), der an einem Ende so ausgebildet ist, daß er das vorstehende Ende des Auskleidungsschlauches (L1) aufnehmen kann und dessen anderes Ende einen im wesentlichen am Ende glatten Drucklageraufbau (122) aufweist, der in eine weitere Rohrkupplung oder einen Rohrabschnitt einsetzbar und darin festlegbar ist; einen Druckring (112), der axial gegenüber dem ersten Hülsenkörper nach außen versetzt ist und der im Gebrauch den Rohrabschnitt (P1) umschließt; einen ersten ringförmigen Dichtungskörper (106), der axial zwischen dem Druckring (112) und dem ersten Hülsenkörper (102) angeordnet ist und im Gebrauch den Rohrabschnitt (P1) umschließt; einen zweiten ringförmigen Dichtungskörper (110), der axial zwischen dem ersten und dem zweiten Hülsenkörper (102, 104) liegt und so angeordnet ist, daß er im Betrieb den vorstehenden Auskleidungsschlauch (L1) umschließt; Mittel, mit denen der Druckring (112) und der erste Hülsenkörper (102) axial derart gegeneinander verspannt werden, daß der erste ringförmige Dichtungskörper (106) dazwischen zusammengedrückt und radial nach innen verformt wird, um gegen den Rohrabschnitt (P1) abzudichten; und Mittel, um den ersten Hülsenkörper (102) gegenüber dem zweiten Hülsenkörper (104) axial derart zu verspannen, daß der zweite ringförmige Dichtungskörper (110) zwischen dem ersten und zweiten Hülsenkörper (102, 104) zusammengedrückt und radial nach innen deformiert wird und in Dichtungsberührung mit dem Ende des Auskleidungsschlauches (L1) gebracht wird.

2. Rohrkupplung nach Anspruch 1, bei welcher die Mittel zur gegenseitigen Verspannung des Druckringes (112) und des ersten Hülsenkörpers (102) und die Mittel zur gegenseitigen Verspannung von erstem und zweitem Hülsenkörper (102, 104) ein- und dieselben sind.

3. Rohrkupplung nach Anspruch 2, bei welcher der Druckring (112) und der zweite Hülsenkörper (104) jeweils mit einem ringsum laufenden Flansch (124) versehen sind und die Flansche (124) durch Flanschbolzen (114) gegeneinander verspannt sind.

4. Rohrkupplung nach einem der vorhergehenden Ansprüche, bei welcher Einspannmittel (108) zwischen dem ersten und zweiten Hülsenkörper (102, 104) vorgesehen sind, wobei diese Einspannmittel (108) gegen den Rohrabschnitt (P1) anpreßbar sind, um diesen Rohrabschnitt einzuspannen, wenn der erste und der zweite Hülsenkörper (102, 104) gegeneinander verspannt werden.

5. Rohrkupplung nach Anspruch 4, bei welcher die Einspannmittel (108) einstückig mit dem zweiten ringförmigen Dichtungskörper (110) hergestellt sind.

6. Rohrkupplung nach einem der Ansprüche 1 bis 4, bei welcher die Einspannmittel (108) getrennt von dem zweiten ringförmigen Dichtungskörper (110) hergestellt, aber benachbart hierzu angeordnet sind.

7. Rohrkupplung nach einem der vorhergehenden Ansprüche, bei welcher die ersten und zweiten Hülsenkörper (102, 104) derart gestaltet sind, daß sie zusammen einen Ringraum definieren, in dem der zweite ringförmige Dichtungskörper (110) und fakultativ auch die Einspannmittel (108) untergebracht sind.

8. Rohrkupplung nach Anspruch 7, bei welcher der Ringraum in Radialrichtung nach außen konisch ausgebildet ist.

9. Rohrkupplungs-Kombination (C1, C2) mit einer Rohrkupplung (2) wie sie in einem der vorhergehenden Ansprüche definiert ist, wobei das am Ende im wesentlichen glatte Drucklager (122) der Rohrkupplung (2) innerhalb der Bohrung einer zweiten Rohrkupplung (4) eingeklemmt ist.

10. Rohrverbindung mit einer Rohrkupplung (2) nach einem der Ansprüche 1 bis 8 oder einer Rohrkupplungs-Kombination (C1, C2) gemäß Anspruch 9, wobei ein Leitungsrohr (P1, P2) und eine Auskleidung (L1, L2) innerhalb eines Endes der Rohrkupplung (2) oder der Rohrkupplungs-Kombination (C1, C2) angeordnet und dort festgelegt sind.

11. Rohrkupplungs-Kombination nach Anspruch 9 oder Rohrverbindung nach Anspruch 10 mit einer Rohrkupplungs-Kombination nach Anspruch 9, wobei die zweite Rohrkupplung (4) eine Länge eines mit glattem Ende versehenen Rohres entfernt vom Drucklager (122) aufnimmt und dieses glatte Rohrende (P3) festlegt.

12. Verfahren zur Auskleidung eines Leitungsrohres mit den folgenden Schritten: es wird ein Abschnitt des Leitungsrohres entfemt, um einen Zwischenraum zwischen den beiden aufgetrennten Enden zu schaffen; es werden Auskleidungsschläuche in das Leitungsrohr auf beiden Seiten des Zwischenraumes eingefügt, derart, daß die Enden des Auskleidungsschlauches aus den aufgetrennten Enden des Leitungsrohres vorstehen; es wird eine Rohrkupplungs-Kombination nach Anspruch 10 auf jedes aufgetrennte Ende des Leitungsrohres und auf den hieraus hervorstehenden Auskleidungsschlauch derart aufgesetzt, daß die zweiten Rohrkupplungen (4) innerhalb des Zwischenraumes befindlich sind; und es wird eine Länge eines Verbindungsrohres (P3) mit den beiden zweiten Rohrkupplungen (4) verbunden, um so den Zwischenraum zu überbrücken.

## Revendications

1. Raccord de tuyau (2) à des fins de raccordement à un élément de tuyau (P1) dans lequel est disposé un tuyau (L1) faisant office de chemise, le raccord de tuyau (2) comprenant : un premier élément de manchon (102) destiné à recevoir une extrémité de l'élément de tuyau (P1) de telle sorte qu'une extrémité du tuyau (L1) faisant office de chemise est à même de faire saillie par rapport à la première citée ; un deuxième élément de manchon (104) configuré à une de ses extrémités pour recevoir l'extrémité faisant saillie du tuyau (L1) faisant office de chemise et possédant, à son autre extrémité, une structure d'emboîtement (122) essentiellement en forme de bout uni à des fins d'insertion dans ladite extrémité et de fixation à un autre raccord de tuyau ou à un autre élément de tuyau ; une bague annulaire (112) disposée en position axiale à l'extérieur du premier élément de manchon et arrangée, en état de marche, pour encercler l'élément de tuyau (P1) ; un premier moyen d'étanchéisation annulaire (106) disposé en position axiale entre la bague annulaire (112) et le premier élément de manchon (102) et arrangé, en état de marche, pour encercler l'élément de tuyau (P1) ; un deuxième moyen d'étanchéisation annulaire (110) disposé en position axiale entre les premier et deuxième éléments de manchons (102, 104) et arrangé, en état de marche, pour encercler le tuyau (L1) faisant office de chemise qui fait saillie ; un moyen pour tirer la bague annulaire (112) et le premier élément de manchon (102) en direction axiale l'un vers l'autre de telle sorte que le premier moyen d'étanchéisation annulaire (106) est comprimé entre eux et subit une déformation en direction radiale vers l'intérieur pour venir se disposer de manière étanche contre l'élément de tuyau (P1) ; et un moyen pour tirer les premier et deuxième éléments de manchons (102, 104) en direction axiale l'un vers l'autre de telle sorte que le deuxième élément d'étanchéisation annulaire (110) est comprimé entre les premier et deuxième éléments de manchons (102, 104) et subit une déformation en direction radiale vers l'intérieur pour entrer en contact d'étanchéisation avec l'extrémité du tuyau (L1) faisant office de chemise.

2. Raccord de tuyau selon la revendication 1, dans lequel le moyen pour tirer la bague annulaire (112) et le premier élément de manchon (102) l'un vers l'autre et le moyen pour tirer les premier et deuxième éléments de manchons (102, 104) l'un vers l'autre représentent un seul et même moyen.

3. Raccord de tuyau selon la revendication 2, dans lequel la bague annulaire (112) et le deuxième élément de manchon (104) sont chacun muni d'une bride circonférentielle (124), les brides (124) étant reliées par des boulons d'accouplement (114).

4. Raccord de tuyau selon l'une quelconque des revendications précédentes, dans lequel on prévoit un moyen de préhension (108) entre les premier et deuxième éléments de manchons (102, 104), le moyen de préhension (108) étant à même d'être comprimé contre l'élément de tuyau (P1) afin de saisir ce dernier lorsque les premier et deuxième éléments de manchons (102, 104) sont tirés l'un vers l'autre.

5. Raccord de tuyau selon la revendication 4, dans lequel le moyen de préhension (108) est façonné de manière solidaire avec le deuxième élément d'étanchéisation annulaire (110).

6. Raccord de tuyau selon l'une quelconque des revendications 1 à 4, dans lequel le moyen de préhension (108) est formé séparément par rapport au deuxième élément d'étanchéisation annulaire (110), mais est disposé en position adjacente à ce dernier.

7. Raccord de tuyau selon l'une quelconque des revendications précédentes, dans lequel les premier et deuxième éléments de manchons (102, 104) sont configurés de telle sorte qu'ils définissent ensemble un évidement annulaire dans lequel viennent se disposer le deuxième élément d'étanchéisation annulaire (110) et, le cas échéant, le moyen de préhension (108).

8. Raccord de tuyau selon la revendication 7, dans lequel l'évidement annulaire présente une conicité en direction radiale vers l'extérieur.

9. Combinaison de raccords de tuyaux (C1, C2) comprenant un raccord de tuyau (2) tel que défini dans l'une quelconque des revendications précédentes, la structure d'emboîtement (122) essentiellement en forme de bout uni du raccord de tuyau (2) étant serré à l'intérieur de l'alésage d'un deuxième raccord de tuyau (4).

10. Jonction de tuyaux comprenant un raccord de tuyau (2) tel que défini dans l'une quelconque des revendications 1 à 8, ou une combinaison de raccords de tuyaux (C1, C2) telle que définie dans la revendication 9, dans laquelle un tuyau hôte (P1, P2) et une chemise (L1, L2) y sont logés, tout en étant reliés à une extrémité du raccord de tuyau (2) ou de la combinaison de raccords de tuyaux (C1, C2).

11. Combinaison de raccords de tuyaux selon la revendication 9 ou jonction de tuyaux selon la revendication 10 contenant la combinaison de raccords de tuyaux selon la revendication 9, dans laquelle une longueur de tuyau à bout uni (P3) vient se loger dans le deuxième raccord de tuyau (4) et se fixer à l'extrémité de ce dernier éloignée de la structure d'emboîtement (122).

12. Procédé pour munir un tuyau hôte d'une chemise, comprenant le fait de retirer une section du tuyau hôte pour laisser subsister un espace libre entre une paire d'extrémités découpées ; monter des longueurs de tuyau faisant office de chemise dans le tuyau hôte d'un côté ou de l'autre de l'espace libre de telle sorte que les extrémités du tuyau faisant office de chemise font saillie par rapport aux extrémités découpées du tuyau hôte ; fixer une combinaison de raccords de tuyaux selon la revendication 10 à chaque extrémité découpée et aux tuyaux faisant office de chemise faisant saillie par rapport à chacune de ces dernières de telle sorte que les deuxièmes raccords de tuyaux (4) soient disposés le plus à l'intérieur dans l'espace libre; et raccorder une longueur de tuyau de liaison (P3) aux deux deuxièmes raccords de tuyaux (4) de façon à surplomber l'espace libre.
